Europäisches Patentamt

European Patent Office

Office européen des brevets

(19)

(11) Publication number : **0 495 760 A2**

(12) # EUROPEAN PATENT APPLICATION

(21) Application number : **92830013.6**

(22) Date of filing : **17.01.92**

(51) Int. Cl.⁵ : **B23K 10/00**

Priority: 180191 IT FI91000012.

(30) Priority : **18.01.91 IT 1291**

(43) Date of publication of application :
**22.07.92 Bulletin 92/30**

(84) Designated Contracting States :
**DE ES FR GB**

(71) Applicant : **L'EUROPEA S.p.A.**
**Via Oberdan 2**
**I-53034 Colle Val d'Elsa, Siena (IT)**

(72) Inventor : **Saitti, Mario**
**Via della Badia n.4**
**I-53034 Colle di Val d'Elsa, Siena (IT)**

(74) Representative : **Mannucci, Gianfranco,**
**Dott.-Ing. et al**
**Ufficio Tecnico Ing. A. Mannucci Via della**
**Scala 4**
**I-50123 Firenze (IT)**

(54) **Combined machine for plasma-arc cutting, welding, electric generating set, and for generation of compressed air.**

(57)    A plasma-arc cutting machine comprises in combination : an internal combustion engine ; a voltage generator operated by said engine ; an air compressor ; a plasma-arc cutting torch electrically fed by said generator and pneumatically fed by said compressor ; and means for controlling and timing the feeding of said torch. The machine is constructed as a self-contained unit and can be used at sites where no electric network is provided.

At present, machines for plasm-arc cutting are known which are connected to an already provided electric network and to a source of compressed air; the latter may be of a compressed air line of a system which serves several users or a dedicated compressor as well. When the machine is to be used at sites whith no mains available, it is necessary to provide a separate electric generating set for supplying electricity to the machine and, possibly, an electric generating set or an internal combustion engine for powering the air compressor.

The object of the invention is a machine capable of carrying out a plurality of functions and forming a compact and easily transportable unit apt for use even at sites having no infrastructures nor mains.

Substantially, the invention relates to a plasma-arc cutting machine comprising in combination: an internal combustion engine; a voltage generator operated by said engine; an air compressor; a plasma-arc cutting torch electrically fed by said generator and pneumatically fed by said compressor; and means for controlling and timing the feeding of said torch. The machine according to the invention thus embodies, in a single unit, a plurality of functions enabling it to operate in an absolutely independent manner. The internal combustion engine may be the only one operating both the generator and the compressor. The unit thus obtained is easily transportable and can be used at any site, even where no infrastructure are present and, in particular, at sites remote from the mains. The control and time means ensure the correct operation and coordination of the various machine parts.

Advantageously, the generator may be a three-phase asynchronous generator. This is particularly important when the machine is provided with an outlet for electrode-welding. In this case, the asynhronous generator provides an optimal characteristic curve for the welder operation, so that the machine makes up a unit allowing this last function to be carried out as well.

The machine may be completed with an outlet for compressed air, apt to feed a user other than the torch for plasma-arc cutting. This further improves the machine performance and versatility. It is thus possible to achieve, with a single unit, not only the plasma-arc cutting, but also the functions of voltage generation, likewise a normal electric generating set, and of welding, in addition to the feeding of a further line of compressed air.

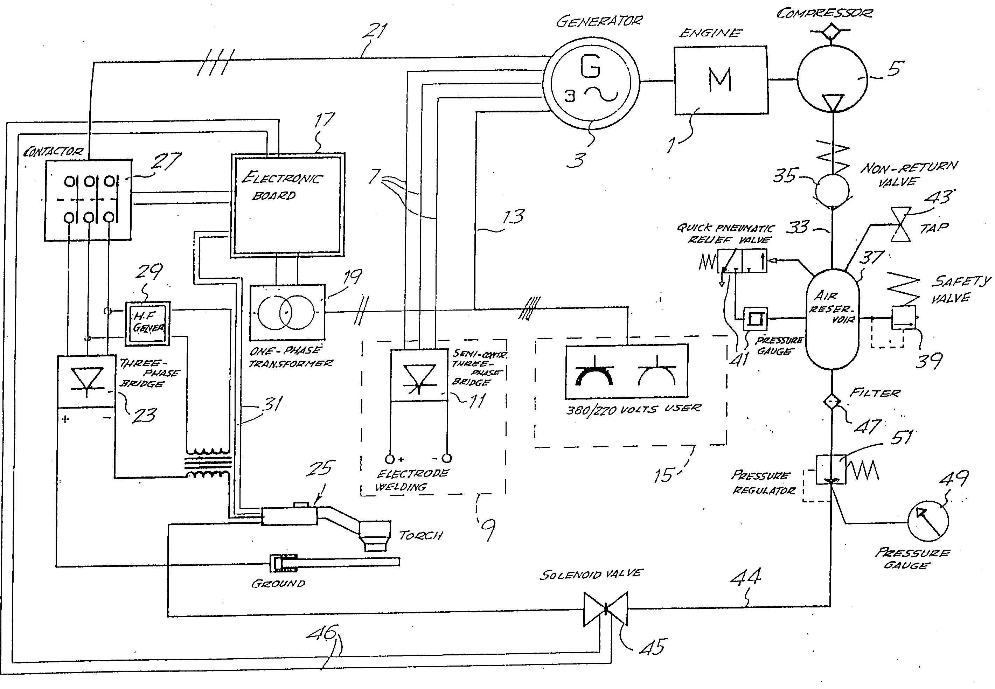

The invention will be better understood by following the description and the attached drawing, which shows a practical, not limiting exemple of the same invention. The only figure of the attached drawing shows a diagram of the electrical and pneumatic circuits of the machine according to the invention.

In the attached diagram, numeral 1 indicates an internal combustion engine which operates an alternating voltage generator 3, avantageously of asynchronous type for welding requirements. The same engine may drive more parallel generators. The transmission may take place in any suitable way such as by gears, belts or other. The same engine 1 drives simultaneously a compressor 5 for compressed air generation. More parallel compressors may also be provided. The type of compressor may be advantageously selected to meet the pressure and capacity requirements and will preferably be of rotary, positive displacement type.

The generator 3 feeds, via a line 7, a three-phase outlet 9 with a semi-controlled three-phase diode bridge 11 for a welder. A further feed line 13 feeds a one-three-phase voltage outlet 15 for a generic user. Also derived from this line is the power for a machine-controlling electronic board 17 which is fed at low-voltage by a transformer 19. A third line 21 feeds, through a three-phase diode bridge 23, a torch 25 for plasma-arc cutting. Disposed on the line 21 is a contactor 27 controlled by the electronic board 17, and a high frequency generator 29 for the generation of the electromagnetic field. The torch 25 is connected to the electronic board 17 through a control line 31.

The compressor is connected, via a line 33 having a non-return valve disposed therein, to a reservoir 37 of air under pressure. The reservoir 37 is provided with a safety valve 39, a pressure gauge, a quick-relief valve 41 and a tap 43; the latter can be connected to any user. Downstream of reservoir 37 a pneumatic line 44 is provided on which a normally closed solenoid valve 45 is located. The solenoid valve 45 is connected, via an electric line, to the electronic board 17 which provides for the control thereof. Located upstream of the solenoid valve 45, between the latter and the reservoir 37, these are a pressure gauge 49 and a manually controlled pressure regulator 51, with a filter 47 being disposed upstream of said regulator. The pneumatic line 44 terminates on the torch 25 to which it supplies, on request, the compressed air for generating the plasma and carrying out the cut.

The summarily described machine provides for a plurality of functions to be performed by a single unit, and in particular:
- generation of one- and three-phase electric energy with relevant outlets 15;
- generation of compressed air that can be withdrawn from the tap 43 for whatever use, and from line 44 for feeding the plasma-arc cutting torch;
- electric supply of the plasma-arc-cutting torch;
- supply of an electrode welder through the outlet 9.

The machine is controlled by the electronic board 17 which provides for driving and timing the air flow to the plasma-arc cutting torch, and the electric part of the same torch, and for the activation of the various protections against overloads and short circuits.

It is understood that the drawing shows an exemplification given only as a practical demonstration of the invention, as this may vary in the forms and dispositions without nevertheless coming out from the scope of the idea on which the same invention is based. .pa

## Claims

1. A plasma-arc cutting machine comprising in combination: an internal combustion engine; a voltage generator operated by said engine; an air compressor; a plasma-arc cutting torch electrically fed by said generator and pneumatically fed by said compressor; and means for controlling and timing the feeding of said torch.

2. A machine according to claim 1, characterized in that a single internal combustion engine operates both the compressor and the voltage generator.

3. A machine according to claim 1 or 2, characterized in that said generator is an asynchronous three-phase generator.

4. A machine according to one or more preceding claims, characterized in that it comprises an electronic control board connected to said torch, to the electric feeding means of the torch and to a solenoid valve disposed on the pneumatic line for feeding air to said torch.

5. A machine according to one or more preceding claims, characterized in that said voltage generator is connected to an outlet for a welder.

6. A machine according to one or more preceding claims, characterized in that said voltage generator is connected to a one-three-phase outlet.

7. A machine according to one or more preceding claims, characterized in that said compressor is provided with feeding means of a further air compressed line, which line is independent of the one feeding of the plasma-arc cutting torch.